(19) <span>Europäisches Patentamt<br>European Patent Office<br>Office européen des brevets</span>

(11) **EP 2 950 578 A1**

(12) **EUROPEAN PATENT APPLICATION**
published in accordance with Art. 153(4) EPC

(43) Date of publication:
**02.12.2015 Bulletin 2015/49**

(21) Application number: **13873015.5**

(22) Date of filing: **25.01.2013**

(51) Int Cl.:
*H04W 28/12* (2009.01)  *H04W 28/16* (2009.01)
*H04W 88/02* (2009.01)  *H04W 88/08* (2009.01)

(86) International application number:
**PCT/CN2013/071008**

(87) International publication number:
**WO 2014/113982 (31.07.2014 Gazette 2014/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Fujitsu Limited
Kawasaki-shi, Kanagawa 211-8588 (JP)**

(72) Inventors:
• **ZHANG, Yi
Beijing 100025 (CN)**

• **SONG, Lei
Beijing 100025 (CN)**
• **ZHOU, Hua
Beijing 100025 (CN)**

(74) Representative: **Ward, James Norman
Haseltine Lake LLP
Lincoln House, 5th Floor
300 High Holborn
London WC1V 7JH (GB)**

(54) **SIGNALING INDICATION METHOD, USER EQUIPMENT AND BASE STATION FOR DEMODULATING REFERENCE SIGNAL**

(57) Embodiments of the present disclosure provide a signaling indication method for a DM-RS, UE and base station. The method includes: configuring, by a base station, UE with candidate information of scrambling identifiers by using a high-layer signaling; and transmitting a dynamic signaling to the UE, so that the UE performs channel estimation and demodulation on a received signal according to the dynamic signaling. With the embodiments of the present disclosure, larger dimensions of MU-MIMO may be supported, and an advantage of large-scale antenna may be fully acquired.

301

configuring, by a base station, UE with candidate information of
scrambling identifiers by using a high-layer signaling

302

transmitting, by the base station, a dynamic signaling to the UE,
so that the UE performs channel estimation and demodulation on
a received signal according to the dynamic signaling

**Fig. 3**

**Description**

Technical Field

The present disclosure relates to the field of communications, and in particular to a signaling indication method for a demodulation reference signal, UE and base station.

Background

The multiple user multiple input multiple output (MU-MIMO) technology reduces inter-user interference and improves capacity of a system by using orthogonality of a spatial domain. And when it is used in a heterogeneous network, the capacity of the system may be further improved.

On the other hand, large-scale antenna, used to enhance the coverage of the system, to eliminate inter-user interference, and to reduce the number of sites and lower cost of operation and maintenance, is one of the hot candidate technologies in an LTE-A system. Wherein, user 3D beamforming technology is a technology which is relatively industrialized.

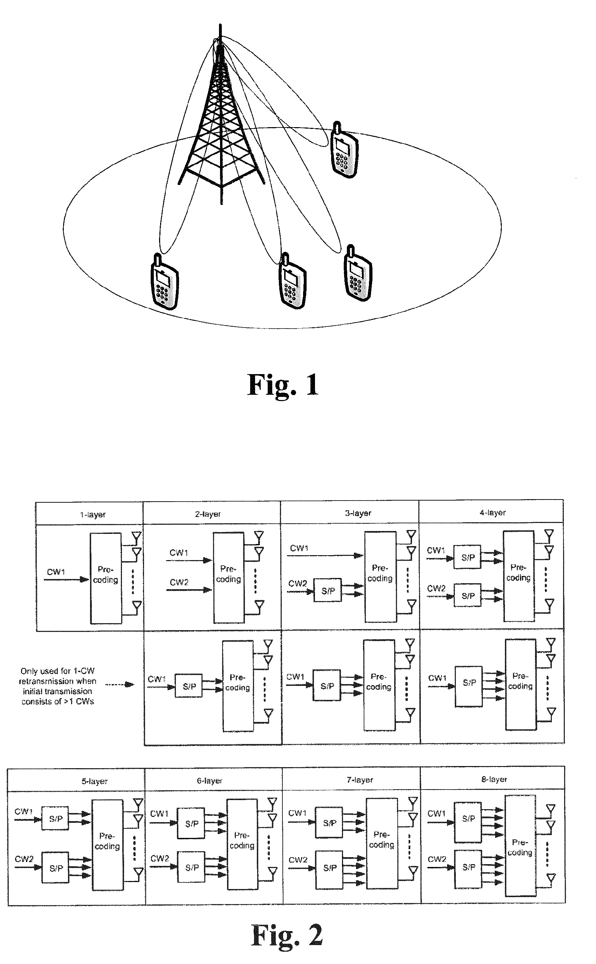

Figure 1 is a schematic diagram of the user 3D beamforming technology. As shown in Fig. 1, by beam alignment at a base station end, the user may acquire higher beamforming gains, and inter-user interference may be reduced. And the system is able to support a multiple user multiple antenna technology with more data streams, and the user is multiplexed spatially, thereby further improving the capacity of the system.

However, it was found by the inventor that in the existing solutions, a design of signaling of a downlink demodulation reference signal (DM-RS), for example, in R10, limits the number of dimensions of the MU-MIMO, and cannot acquire an advantage of the large-scale antenna.

It should be noted that the above description of the background is merely provided for clear and complete explanation of the present disclosure and for easy understanding by those skilled in the art. And it should not be understood that the above technical solution is known to those skilled in the art as it is described in the background of the present disclosure.

Summary

Embodiments of the present disclosure provide a signaling indication method for a demodulation reference signal, UE and base station, with an object being to support a larger number of dimensions of the MU-MIMO, and fully acquire an advantage of the large-scale antenna.

According to an aspect of the embodiments of the present disclosure, there is provided a signaling indication method for a DM-RS, applicable to an MU-MIMO system, the method including:

configuring, by a base station, UE with candidate information of scrambling identifiers by using a high-layer signaling; and
transmitting a dynamic signaling to the UE, so that the UE performs channel estimation and demodulation on a received signal according to the dynamic signaling.

According to another aspect of the embodiments of the present disclosure, there is provided a signaling indication method for a DM-RS, applicable to an MU-MIMO system, the method including:

transmitting, by a base station, a dynamic signaling for a DM-RS to UE, so as to indicate the UE to perform orthogonal MU-MIMO with a maximum sum rank of 4 with other UE, or indicate the UE with a rank of greater than 2 to perform non-orthogonal MU-MIMO with the other UE.

According to a further aspect of the embodiments of the present disclosure, there is provided a signaling indication method for a DM-RS, applicable to an MU-MIMO system, the method including:

receiving, by UE, candidate information of scrambling identifiers configured by a base station; and
receiving, by the UE, a dynamic signaling transmitted by the base station, so as to perform channel estimation and demodulation on a received signal according to the dynamic signaling.

According to still another aspect of the embodiments of the present disclosure, there is provided a signaling indication method for a DM-RS, applicable to an MU-MIMO system, the method including:

receiving, by UE, a dynamic signaling for a DM-RS transmitted by a base station; and
performing orthogonal MU-MIMO with a maximum sum rank of 4 by the UE with other UE, or performing non-orthogonal MU-MIMO by the UE with the other UE.

According to still another aspect of the embodiments of the present disclosure, there is provided a base station, applicable to an MU-MIMO system, the base station including:

a configuring unit, configured to configure UE with candidate information of scrambling identifiers by using a high-layer signaling; and
a signaling transmitting unit, configured to transmit a dynamic signaling to the UE, so that the UE performs channel estimation and demodulation on a received signal according to the dynamic signaling.

According to still another aspect of the embodiments of the present disclosure, there is provided a base station, applicable to an MU-MIMO system, the base station including:

a signaling transmitting unit, configured to transmit a dynamic signaling for a DM-RS to UE, so as to indicate the UE to perform orthogonal MU-MIMO with a maximum sum rank of 4 with other UE, or indicate the UE with a rank of greater than 2 to perform non-orthogonal MU-MIMO with the other UE.

According to still another aspect of the embodiments of the present disclosure, there is provided UE, applicable to an MU-MIMO system, the UE including:

an information receiving unit, configured to receive candidate information of scrambling identifiers configured by a base station; and
a signaling receiving unit, configured to receive a dynamic signaling transmitted by the base station, so as to perform channel estimation and demodulation on a received signal according to the dynamic signaling.

According to still another aspect of the embodiments of the present disclosure, there is provided UE, applicable to an MU-MIMO system, the UE including:

a signaling receiving unit, configured to receive a dynamic signaling for a DM-RS transmitted by a base station; and
a processing unit, configured to perform orthogonal MU-MIMO with a maximum sum rank of 4 with other UE, or perform non-orthogonal MU-MIMO with the other UE.

According to still another aspect of the embodiments of the present disclosure, there is provided a communication system, including the base station as described above and the UE as described above.
According to still another aspect of the embodiments of the present disclosure, there is provided a computer-readable program, wherein when the program is executed in UE, the program enables a computer to carry out the signaling indication method for DM-RS as described in the above embodiments in the UE.
According to still another aspect of the embodiments of the present disclosure, there is provided a storage medium in which a computer-readable program is stored, wherein the computer-readable program enables a computer to carry out the signaling indication method for DM-RS as described in the above embodiments in UE.
According to still another aspect of the embodiments of the present disclosure, there is provided a computer-readable program, wherein when the program is executed in a base station, the program enables a computer to carry out the signaling indication method for DM-RS as described in the above embodiments in the base station.
According to still another aspect of the embodiments of the present disclosure, there is provided a storage medium in which a computer-readable program is stored, wherein the computer-readable program enables a computer to carry out the signaling indication method for DM-RS as described in the above embodiments in a base station.
An advantage of the embodiments of the present disclosure exists in that by configuring the UE with candidate information of scrambling identifiers by the base station and transmitting the dynamic signaling to the UE, the UE is made to demodulate a received signal according to the dynamic signaling, so that larger dimensions of MU-MIMO may be supported, and an advantage of large-scale antenna may be fully acquired.
With reference to the following description and drawings, the particular embodiments of the present disclosure are disclosed in detail, and the principles of the present disclosure and the manners of use are indicated. It should be understood that the scope of the embodiments of the present disclosure is not limited thereto. The embodiments of the present disclosure contain many alternations, modifications and equivalents within the scope of the terms of the appended claims.
Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

Brief Description of the Drawings

Many aspects of the disclosure can be better understood with reference to the following drawings. The components in the drawings are not necessarily to scale, emphasis instead being placed upon clearly illustrating the principles of the present disclosure. To facilitate illustrating and describing some parts of the disclosure, corresponding portions of the drawings may be exaggerated or reduced in size.

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments.

Figure 1 is a schematic diagram of the user 3D beamforming technology;
Figure 2 is a diagram of a relationship of mapping from a codeword to a layer in an SU-MIMO system;
Figure 3 is a flowchart of the signaling indication method of Embodiment 1 of the present disclosure;
Figure 4 is a diagram of an example of configuring scrambling identifiers by a high layer of Embodiment 1 of the present disclosure;
Figure 5 is a flowchart of the signaling indication method of Embodiment 2 of the present disclosure;
Figure 6 is a diagram of mapping from a codeword to a layer in the relevant art;
Figure 7 is a diagram of mapping from a codeword to a layer of Embodiment 2 of the present disclosure;
Figure 8 is another diagram of mapping from a codeword to a layer of Embodiment 2 of the present disclosure;
Figure 9 is a flowchart of the signaling indication method of Embodiment 3 of the present disclosure;
Figure 10 is a flowchart of the signaling indication method of Embodiment 4 of the present disclosure;
Figure 11 is a schematic diagram of the structure of the base station of Embodiment 5 of the present disclosure;
Figure 12 is a schematic diagram of the structure of the base station of Embodiment 6 of the present disclosure;
Figure 13 is a schematic diagram of the structure of the UE of Embodiment 7 of the present disclosure;
Figure 14 is a schematic diagram of the structure of the UE of Embodiment 8 of the present disclosure; and
Figure 15 is a schematic diagram of the structure of the communication system of Embodiment 9 of the present disclosure.

Detailed Description

The foregoing and other features of the present disclosure shall become apparent from the following description with reference to the accompanying drawings. Particular embodiments of the present disclosure are disclosed in the description and drawings, which indicate part of the embodiments that may employ the principle of the present disclosure. It should be understood that the present disclosure is not limited to the described embodiments. On the contrary, the present disclosure includes all the modifications, variations and equivalents falling within the scope of the appended claims.

The demodulation reference signal (DM-RS) is an important reference signal in an LTE-A system. UE may use the DM-RS to estimate an equivalent channel on an MIMO transmission layer, and then demodulate data information according to the equivalent channel.

On the other hand, the MU-MIMO technology is used in a high load, high signal to noise ratio and high correlation channel scenario. It outstandingly improves the capacity of the system, and is an important characteristic of an LTE Rel. 10 system. Technical features of the MU-MIMO may include:

(1) supporting the single user (SU)/multiple user (MU) dynamic handover;
(2) it is transparent to a user, that is, the user does not explicitly know whether there is another user performing MU-MIMO paired transmission with it;
(3) the number of dimensions supported by the MU-MIMO is: the sum rank (which is sometimes referred to as a sum layer number or a sum stream number) is not greater than 4, a rank of each user being not greater than 2; and
(4) for a demodulation reference signal (DM-RS), orthogonal and quasi-orthogonal multiplexing manners are supported; wherein the quasi-orthogonal MU-MIMO manner is applied to transmitting information on users with spatial channels being relatively easily separated.

In particular, the multiple user multiplexed DM-RSs may be differentiated by orthogonal ports or orthogonal sequences. Wherein, the orthogonal ports include multiplexing between port 7 and port 8. A particular signaling design may be as shown in Table 1.

Table 1 Signaling design of antenna port(s), scrambling sequences and number of layers indication

| One Codeword: Codeword 0 enabled, Codeword 1 disabled | | Two Codewords: Codeword 0 enabled, Codeword 1 enabled | |
|---|---|---|---|
| Value | Message | Value | Message |
| 0 | 1 layer, port 7, $n_{SCID}$=0 | 0 | 2 layers, ports 7-8, $n_{SCID}$=0 |
| 1 | 1 layer, port 7, $n_{SCID}$=1 | 1 | 2 layers, ports 7-8, $n_{SCID}$=1 |
| 2 | 1 layer, port 8, $n_{SCID}$=0 | 2 | 3 layers, ports 7-9 |
| 3 | 1 layer, port 8, $n_{SCID}$=1 | 3 | 4 layers, ports 7-10 |
| 4 | 2 layers, ports 7-8 | 4 | 5 layers, ports 7-11 |
| 5 | 3 layers, ports 7-9 | 5 | 6 layers, ports 7-12 |
| 6 | 4 layers, ports 7-10 | 6 | 7 layers, ports 7-13 |
| 7 | Reserved | 7 | 8 layers, ports 7-14 |

In this embodiment, as the increase of the number of antennas, the system improves spatial differentiating abilities of the users, and multiple users may perform MU-MIMO operations. And the sum rank of the MU-MIMO may be expanded to 8, and a rank supported by a single user may be 2 or may be expanded to 4. Particularly, when the orthogonal MU-MIMO is employed, interference between users is relatively small, and the performance of the system is relatively good. Currently, the orthogonal MU-MIMO only supports a single stream of a single user, which may be expanded to multiple streams of a single user. Furthermore, if the system supports nontransparent MU-MIMO, the receiving end may use an interference cancellation algorithm to improve the performance of the system. However, the user needs to be informed of related information on paired users.

Fig. 2 is a diagram of a relationship of mapping from a codeword to a layer in an SU-MIMO (single user multiple input multiple output) system. As shown in Fig. 2, the system has at most 2 codewords (CWs) and 8 layers, each codeword containing at most four layers. For each codeword, a user needs to feed back channel quality indicator (CQI) information and acknowledgement (ACK/NACK) information. Such a mapping method obtains good tradeoff between feedback overhead and feedback accuracy, and optimizes the performance of the system to some extent. Table 2 is description corresponding to the standard.

Table 2 Mapping from a codeword to a layer

| Number of layers | Number of codewords | Codeword-to-layer mapping $i = 0, 1, ..., M_{symb}^{layer} - 1$ | |
|---|---|---|---|
| 1 | 1 | $x^{(0)}(i) = d^{(0)}(i)$ | $M_{symb}^{layer} = M_{symb}^{(0)}$ |
| 2 | 2 | $x^{(0)}(i) = d^{(0)}(i)$ <br> $x^{(1)}(i) = d^{(1)}(i)$ | $M_{symb}^{layer} = M_{symb}^{(0)} = M_{symb}^{(1)}$ |
| 2 | 1 | $x^{(0)}(i) = d^{(0)}(2i)$ <br> $x^{(1)}(i) = d^{(0)}(2i + 1)$ | $M_{symb}^{layer} = M_{symb}^{(0)} \big/ 2$ |
| 3 | 2 | $x^{(0)}(i) = d^{(0)}(i)$ <br> $x^{(1)}(i) = d^{(0)}(2i)$ <br> $x^{(2)}(i) = d^{(1)}(2i+1)$ | $M_{symb}^{layer} = M_{symb}^{(0)} = M_{symb}^{(1)} \big/ 2$ |

(continued)

| Number of layers | Number of codewords | Codeword-to-layer mapping $i = 0,1,...,M_{\text{symb}}^{\text{layer}} - 1$ | |
|---|---|---|---|
| 4 | 2 | $x^{(0)}(i) = d^{(0)}(2i)$ <br> $x^{(1)}(i) = d^{(0)}(2i + 1)$ <br> $x^{(2)}(i) = d^{(1)}(2i)$ <br> $x^{(3)}(i) = d^{(1)}(2i + 1)$ | $M_{\text{symb}}^{\text{layer}} = M_{\text{symb}}^{(0)} / 2 = M_{\text{symb}}^{(1)}$ |

When an LTE R10 system performs MU-MIMO transmission, the MU-MIMO is transparent to users, and hence, a mapping manner follows the mapping manner from a codeword to a layer of the single user. In this embodiment, in a large-scale antenna system, if nontransparent MU-MIMO is supported, this mapping manner is possibly optimized. Dynamic signaling indication supporting flexible MU-MIMO in a large-scale antenna system shall be described below in detail with reference to particular embodiments.

Embodiment 1

An embodiment of the present disclosure provides a signaling indication method for a DM-RS, applicable to a base station side of a MU-MIMO system, which may support transparent MU-MIMO.

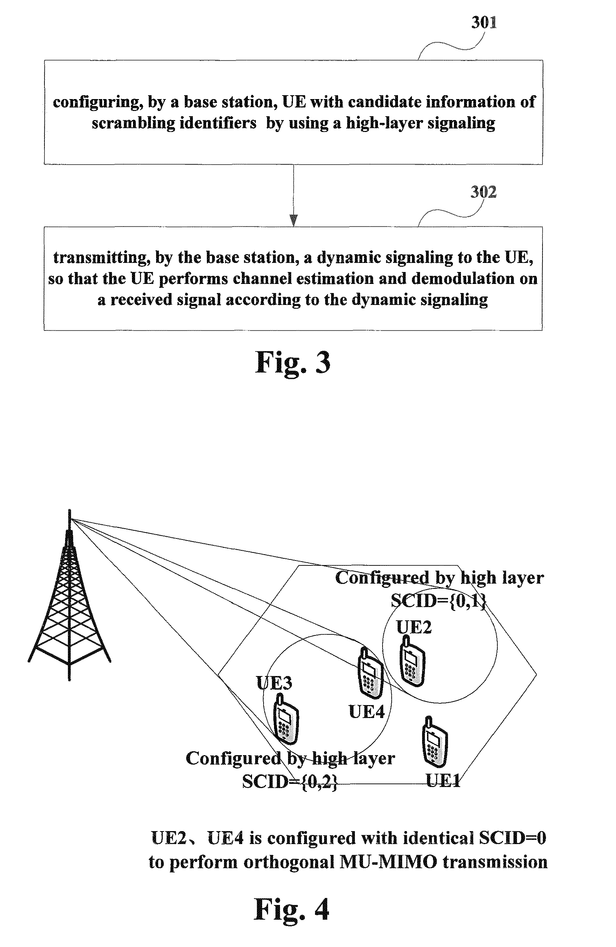

Fig. 3 is a flowchart of the signaling indication method of the embodiment of the present disclosure. As shown in Fig. 3, the method includes:

step 301: configuring, by a base station, UE with candidate information of scrambling identifiers by using a high-layer signaling; and
step 302: transmitting, by the base station, a dynamic signaling to the UE, so that the UE performs channel estimation and demodulation on a received signal according to the dynamic signaling.

In this embodiment, a sum rank (which may also be referred to as a sum layer number or a sum stream number) supported by the system may be expanded to be not greater than 8, and a rank (which may also be referred to as a stream number or a layer number) supported by each UE may still be not greater than 2 or may be expanded to be not greater than 4. The UE may demodulate the received signal according to the signaling indication. The relevant art may be referred to for how to particularly demodulate. However, the present disclosure is not limited thereto; for example, the sum rank may be greater than 8 in performing nontransparent MU-MIMO.

In this embodiment, the rank of each UE supported by the signaling indication may be not greater than 2. The signaling indication in such a case shall be described below in detail. Wherein, the high-layer signaling may be an RRC signaling, and the candidate information of the scrambling identifier may be two scrambling identifiers; however, the present disclosure is not limited thereto. Following description is given taking that the candidate information is two scrambling identifiers as an example.

In this embodiment, the UE may process the received signal according to the dynamic signaling, and may process a reference signal or a data signal. For example, channel estimation and demodulation may be performed. However, the present disclosure is not limited thereto. The relevant art may be referred to for particular processing.

In an Implementation, the signaling indication may include two scrambling identifiers, and the scrambling identifier may be configured by using the high-layer signaling, and may also be set in a semi-static signaling manner. Wherein, the value of the scrambling identifier may be taken from a set {0, 1, 2, 3} or a set {0,1, UE-ID}.

In particular, corresponding signaling may be divided into two parts. A first part is two identifiers configured by a high layer, which may be marked as SCID0 and SCID1 (which may use an RRC signaling). And a second part is dynamic indication of a scrambling sequence, an antenna port and a number of layers (which may use a dynamic signaling carried by a PDCCH). Wherein, the scrambling sequence may be an identifier selected from the two identifiers and used for calculating an initial value of scrambling.

In this embodiment, for a DM-RS antenna port, a reference signal sequence may be defined as being identical to that in R10. Wherein, an initial value (i.e. the initial value of scrambling) of a pseudo-random sequence generator may be determined from the formula below:

$$c_{init} = \left( \lfloor n_s / 2 \rfloor + 1 \right) \bullet \left( 2 N_{cell}^{ID} + 1 \right) \bullet 2^{16} + n_{SCID};$$

where, $n_{SCID}$ may be 0, 1, 2, 3 or UE-ID (which may be above-described SCID0, SCID1), and may be determined by a dynamic selection signaling. The relevant art may be referred to for details of other parameters.

In an implementation, the dynamic signaling may include a first dynamic signaling containing port information and layer information. It should be noted that the first dynamic signaling of this embodiment is not limited thereto, and may be suitably adjusted according to an actual situation. In this implementation, the first dynamic signaling may further include information for indicating the identifier information selected from the two scrambling identifiers.

Table 3 shows details of the first dynamic signaling to which this implementation corresponds. As shown in Table 3, values of SCID may be taken in two manners, the first one is that the values are taken from a set {0, 1, 2, 3}, and the second one is that the values are taken from a set {0, 1, UE-ID}. Wherein, the kept values 0, 1 are for being compatible with an R10 user for performing MU-MIMO transmission, and the added values {2, 3} are for guaranteeing that a sum rank is 8. In order to support non-orthogonal MU-MIMO of more users, UE-ID may be selected as the initial value of the scrambling sequence.

Table 3 Indication signaling design of antenna ports, scrambling sequences and number of layers in an implementation

| One Codeword: Codeword 0 enabled, Codeword 1 disabled | | Two Codewords: Codeword 0 enabled, Codeword 1 enabled | |
|---|---|---|---|
| Value | Message | Value | Message |
| 0 | 1 layer, port 7, $n_{SCID}$=SCID0 | 0 | 2 layers, ports 7-8, $n_{SCID}$= SCID0 |
| 1 | 1 layer, port 7, $n_{SCID}$= SCID1 | 1 | 2 layers, ports 7-8, $n_{SCID}$= SCID1 |
| 2 | 1 layer, port 8, $n_{SCID}$= SCID0 | 2 | 3 layers, ports 7-9 |
| 3 | 1 layer, port 8, $n_{SCID}$= SCID1 | 3 | 4 layers, ports 7-10 |
| 4 | 2 layers, ports 7-8 | 4 | 5 layers, ports 7-11 |
| 5 | 3 layers, ports 7-9 | 5 | 6 layers, ports 7-12 |
| 6 | 4 layers, ports 7-10 | 6 | 7 layers, ports 7-13 |
| 7 | Reserved | 7 | 8 layers, ports 7-14 |

In another implementation, the value of one of the two scrambling identifiers may be taken as 0 or 1, and that of the other one may be the identifier of the UE. In particular, if it is defined that SCID0=0 and SCID1=UE-ID, the high-layer signaling may be omitted.

Therefore, by transmitting the dynamic signaling including the port information, the layer information and the scrambling identifier information to the UE, the base station may make the UE to demodulate the received signal according to the dynamic signaling; wherein, the value of the scrambling identifier may be taken as 0, or may be taken as the UE-ID. However, orthogonal MU-MIMO performed with an R10/R11 user is possibly affected to some extent; that is, orthogonal MU-MIMO cannot be performed with an R10/R11 user of SCID0=1.

In this embodiment, the base station may configure the UE and the other UE with the candidate information including at least one identical scrambling identifier according to positions of the UE and the other UE. That is, when the system configures the initial value by using a high-layer signaling, it may be selected according to the position of the UE. UE in neighboring beam covering areas needs to select an identical initial value, so as to ensure that UE at a boundary of two beams may perform orthogonal MU-MIMO, thereby improving performance of the system.

Fig. 4 is a diagram of an example of configuring scrambling identifiers by a high layer of the embodiment of the present disclosure. As shown in Fig. 4, the base station may configure UE2 with SCID={0, 1} and UE4 with SCID={0, 2} by using the high-layer signaling, and may configure neighboring UE2 and UE4 with identical SCID=0 by using the dynamic signaling carried by a PDCCH. Hence, UE2 and UE4 may perform orthogonal MU-MIMO transmission.

In another implementation, the dynamic signaling may include a first dynamic signaling containing port information and layer information, and the method may further include: transmitting a second dynamic signaling by the base station to the UE, the second dynamic signaling being used to indicate a scrambling sequence configured by a high layer. In particular, the scrambling sequence configured by the high layer may be indicated by adding 1 bit into the dynamic signaling.

In this implementation, in order to further relax a limit to an MU-MIMO rank, that is, a user of a high rank (rank 3-7) may perform non-orthogonal MU-MIMO with a user of a low rank, 1 bit may be added into the dynamic signaling to indicate the scrambling sequence configured by the high layer.

Table 4 shows details of the first dynamic signaling to which this implementation corresponds. As shown in Table 4, signaling design corresponding to antenna ports and layer number indication may be set.

Table 4 Indication signaling design of antenna ports and number of layers in another implementation

| One Codeword: Codeword 0 enabled, Codeword 1 disabled | | Two Codewords: Codeword 0 enabled, Codeword 1 enabled | |
|---|---|---|---|
| Value | Message | Value | Message |
| 0 | 1 layer, port 7 | 0 | 2 layers, ports 7-8 |
| 1 | 1 layer, port 8 | 1 | 3 layers, ports 7-9 |
| 2 | 2 layers, ports 7-8 | 2 | 4 layers, ports 7-10 |
| 3 | 3 layers, ports 7-9 | 3 | 5 layers, ports 7-11 |
| 4 | 4 layers, ports 7-10 | 4 | 6 layers, ports 7-12 |
| 5 | Reserved | 5 | 7 layers, ports 7-13 |
| 6 | Reserved | 6 | 8 layers, ports 7-14 |
| 7 | Reserved | 7 | Reserved |

In another implementation, the method may further include: transmitting a third dynamic signaling by the base station to the UE, the third dynamic signaling being used for indicating a load of the DM-RS. For example, 1 bit may be added into the dynamic signaling to indicate whether the load of the DM-RS is 12RE or 24RE.

In a further implementation, the method may further include: the sum rank information may further indicate a load of the DM-RS. Hence, other signaling (such as 1 bit signaling) is not needed to indicate a size of the load of the DM-RS.

In particular, if the system supports nontransparent MU-MIMO, the sum rank information may be used to indicate a sum rank of the MU-MIMO transmission and the load of the DM-RS. Particularly, the sum rank information may use 3 bit information for indication. And the relevant art may be referred to for details of the sum rank information.

In an implementation, the first dynamic signaling may indicate that ports of the UE are 7, 8, two codewords are used and a number of layers is 2, and a port of the other UE is 9, one codeword is used and a number of layers is 1; or, the ports of the UE are 7, 8, 9, two codewords are used and the number of layers is 3, and the port of the other UE is 10, one codeword is used and the number of layers is 1; or, the ports of the UE are 7, 8, two codewords are used and the number of layers is 2, and the ports of the other UE are 9, 10, two codewords are used and the number of layers is 2.

In another implementation, the first dynamic signaling may indicate that the port of the UE is 7, one codeword is used and the number of layers is 1, and the ports of the other UE are 8, 9, one codeword is used and the number of layers is 2; or, the port of the UE is 7, one codeword is used and the number of layers is 1, and the ports of the other UE are 8, 9, 10, one codeword is used and the number of layers is 3; or, the ports of the UE are 7, 8, one codeword is used and the number of layers is 2, and the ports of the other UE are 9, 10, one codeword is used and the number of layers is 2.

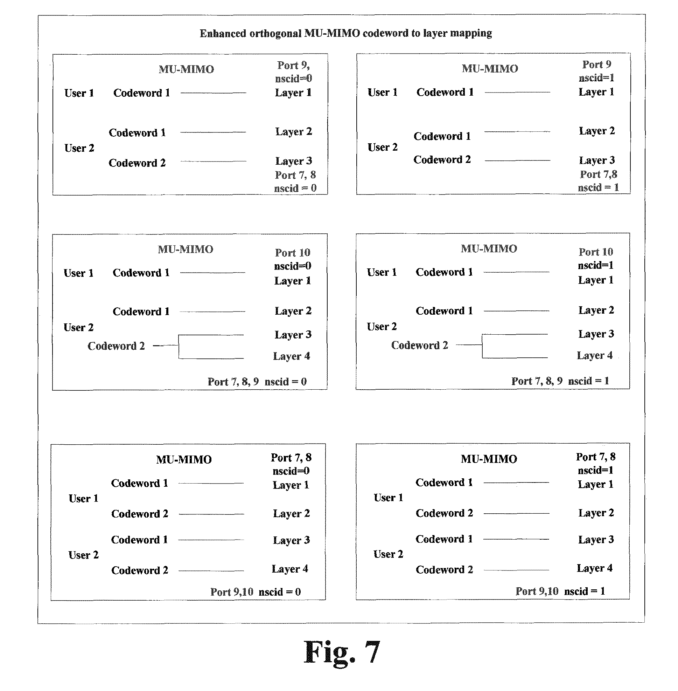

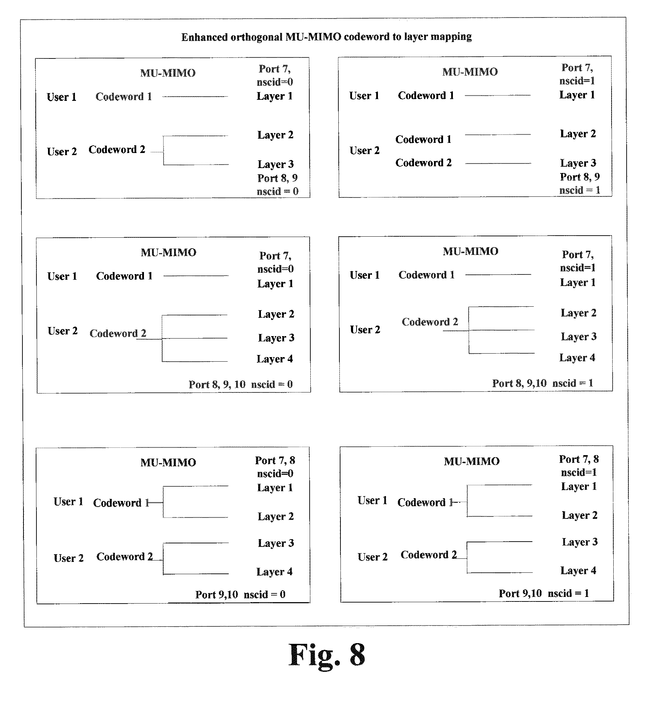

The contents in Embodiment 2 may be referred to for details of the above signaling design, such as the contents in tables 5 and 6 in Embodiment 2, and in Figs. 7 and 8.

In a particular implementation, the dynamic signaling may further include a second dynamic signaling used for indicating scrambling identifier; wherein, the scrambling identifier may be that as described above. That is, the candidate information of the scrambling identifier may be configured by the base station by using a high-layer signaling, and then is indicated by the second dynamic signaling.

In a particular implementation, the dynamic signaling may further include a fourth dynamic signaling used for indicating sum rank information. And the sum rank information may be used to transmit the sum rank information, and the relevant art may be referred to. Furthermore, the sum rank information may be used for indicating the load of the DM-RS.

It can be seen from the above embodiment that by configuring the candidate information of the scrambling identifier by the base station for the UE, the UE may determine the scrambling identifier according to the dynamic signaling, and support transparent MU-MIMO; therefore, larger dimensions of MU-MIMO may be supported, and an advantage of large-scale antenna may be fully acquired.

Embodiment 2

An embodiment of the present disclosure provides a signaling indication method for a DM-RS, applicable to a base station side of a MU-MIMO system, which may support nontransparent MU-MIMO.

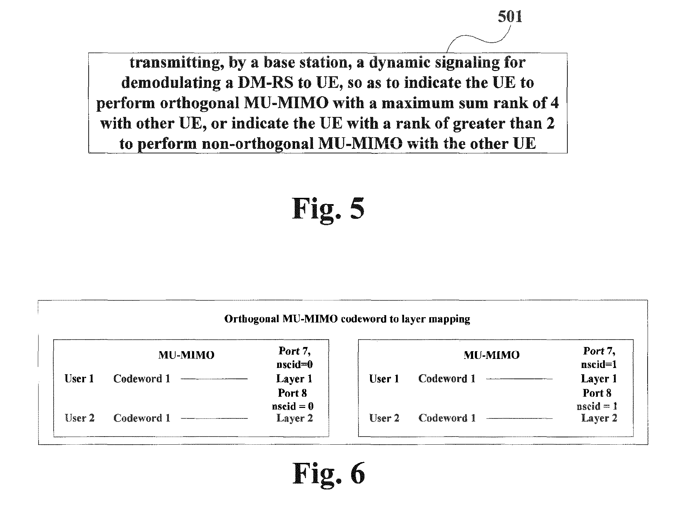

Fig. 5 is a flowchart of the signaling indication method of the embodiment of the present disclosure. As shown in Fig. 5, the method includes:

step 501: transmitting, by a base station, a dynamic signaling for demodulating a DM-RS to UE, so as to indicate the UE to perform orthogonal MU-MIMO with a maximum sum rank of 4 with other UE, or indicate the UE with a rank of greater than 2 to perform non-orthogonal MU-MIMO with the other UE.

In this embodiment, a rank of each UE supported by signaling indications may be not greater than 4. The signaling indications in such a case shall be described below in detail.

In particular, in order to further improve the performance of the system, the dimension of the orthogonal MU-MIMO may be further expanded. For example, each user may support MU-MIMO transmission of a maximum rank 4, and its expansion may be embodied in mapping from a codeword to a layer and enhancement of a dynamic signaling of the orthogonal MU-MIMO.

In an implementation, the dynamic signaling may include a first dynamic signaling, the first dynamic signaling indicating that ports of UE are 7, 8, two codewords are used and a number of layers is 2, and a port of another UE is 9, one codeword is used and a number of layers is 1; or, the ports of the UE are 7, 8, 9, two codewords are used and the number of layers is 3, and the port of the other UE is 10, one codeword is used and the number of layers is 1; or, the ports of the UE are 7, 8, two codewords are used and the number of layers is 2, and the ports of the other UE are 9, 10, two codewords are used and the number of layers is 2.

Fig. 6 is a diagram of mapping from a codeword to a layer in the relevant art. As shown in Fig. 6, the current orthogonal MU-MIMO only supports a single stream of a single user.

Fig. 7 is a diagram of mapping from a codeword to a layer of an embodiment of the present disclosure. As shown in Fig. 7, the embodiment of the present disclosure may support multiple streams of a single user. The UE in Fig. 7 may follow the method of mapping from a codeword to a layer of a single user. Hence, when UE uses more than two streams, two codewords may be used, and two CQIs may be fed back.

Table 5 is a schematic diagram of a corresponding signaling design in the dual-codeword mapping relationship of this embodiment. As shown in Table 5, in a case where a codeword 0 is enabled and a codeword 1 is disabled, one layer and port 9 may be used, or one layer and port 10 may be used; and in a case where the codeword 0 is enabled and the codeword 1 is also enabled, two layers and ports 9-10 may be used.

Table 5 Indication signaling design of antenna ports and number of layers in a further implementation

| One Codeword: Codeword 0 enabled, Codeword 1 disabled | | Two Codewords: Codeword 0 enabled, Codeword 1 enabled | |
|---|---|---|---|
| Value | Message | Value | Message |
| 0 | 1 layer, port 7 | 0 | 2 layers, ports 7-8 |
| 1 | 1 layer, port 8 | 1 | 3 layers, ports 7-9 |
| 2 | 2 layers, ports 7-8 | 2 | 4 layers, ports 7-10 |
| 3 | 3 layers, ports 7-9 | 3 | 5 layers, ports 7-11 |
| 4 | 4 layers, ports 7-10 | 4 | 6 layers, ports 7-12 |
| 5 | 1 layer, port 9 | 5 | 7 layers, ports 7-13 |
| 6 | 1 layer, port 10 | 6 | 8 layers, ports 7-14 |
| 7 | Reserved | 7 | 2 layers, ports 9-10 |

In still another implementation, the dynamic signaling includes a first dynamic signaling, the first dynamic signaling indicating that a port of UE is 7, one codeword is used and a number of layers is 1, and ports of another UE are 8, 9, one codeword is used and a number of layers is 2; or, the port of the UE is 7, one codeword is used and the number of layers is 1, and the ports of the other UE are 8, 9, 10, one codeword is used and the number of layers is 3; or, the ports of the UE are 7, 8, one codeword is used and the number of layers is 2, and the ports of the other UE are 9, 10, one codeword is used and the number of layers is 2.

Fig. 8 is another diagram of mapping from a codeword to a layer of the embodiment of the present disclosure. As shown in Fig. 8, the embodiment of the present disclosure may support multiple streams of a single user. Each UE in Fig. 8 may use one codeword, and each UE only feeds back one CQI.

Table 6 is a schematic diagram of a corresponding signaling design in a single-codeword mapping relationship of this embodiment. As shown in Table 6, in a case where a codeword 0 is enabled and a codeword 1 is disabled, two layers and ports 8-9 may be used, or two layers and ports 9-10 may be used, or three layers and ports 8-10 may be used.

Table 6 Indication signaling design of antenna ports and number of layers in still another implementation

| One Codeword: Codeword 0 enabled, Codeword 1 disabled | | Two Codewords: Codeword 0 enabled, Codeword 1 enabled | |
| --- | --- | --- | --- |
| Value | Message | Value | Message |
| 0 | 1 layer, port 7 | 0 | 2 layers, ports 7-8 |
| 1 | 1 layer, port 8 | 1 | 3 layers, ports 7-9 |
| 2 | 2 layers, ports 7-8 | 2 | 4 layers, ports 7-10 |
| 3 | 3 layers, ports 7-9 | 3 | 5 layers, ports 7-11 |
| 4 | 4 layers, ports 7-10 | 4 | 6 layers, ports 7-12 |
| 5 | 2 layers, ports 8-9 | 5 | 7 layers, ports 7-13 |
| 6 | 2 layers, ports 9-10 | 6 | 8 layers, ports 7-14 |
| 7 | 3 layer ports 8-10 | 7 | Reserved |

It should be noted that Fig. 7 or Fig. 8 gives only the case of the orthogonal MU-MIMO, which only illustrates the present disclosure. However, the present disclosure is not limited thereto, non-orthogonal MU-MIMO may also be performed, and a particular implementation may be determined according to an actual situation.

In still another implementation, the dynamic signaling may further include a second dynamic signaling used for indicating a scrambling identifier. The indicated scrambling identifier may be as described in Embodiment 1, candidate information of the scrambling identifier may be configured by the base station by using a high-layer signaling, and then the scrambling identifier is indicated by the second dynamic signaling. However, the present disclosure is not limited thereto, and a particular implementation may be determined according to an actual situation.

In still another implementation, the base station may transmit a dynamic signaling to the UE, the dynamic signaling being used for indicating a load of the DM-RS. In particular, 1 bit may be added into the dynamic signaling to indicate whether the load of the DM-RS is 12RE or 24RE.

In still another implementation, the dynamic signaling may further include a fourth dynamic signaling for indicating sum rank information. In particular implementation, the sum rank information may be used to indicate a load of the demodulation reference signal.

It can be seen from the above embodiment that by transmitting the signaling indication by the base station to the UE, the UE is made to perform orthogonal or non-orthogonal MU-MIMO; therefore, larger dimensions of MU-MIMO may be supported, and an advantage of large-scale antenna may be fully acquired.

Embodiment 3

An embodiment of the present disclosure provides a signaling indication method for a DM-RS, applicable to a UE side of a MU-MIMO system, with contents identical to those in Embodiment 1 being not going to be described any further.

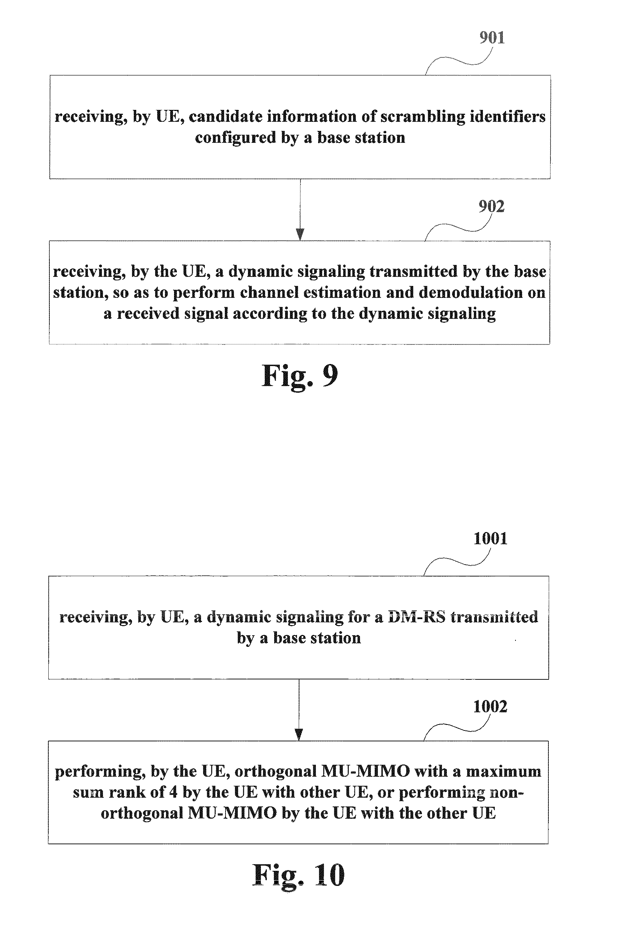

Fig. 9 is a flowchart of the signaling indication method of the embodiment of the present disclosure. As shown in Fig. 9, the method includes:

step 901: receiving, by UE, candidate information of scrambling identifiers configured by a base station; and
step 902: receiving, by the UE, a dynamic signaling transmitted by the base station, so as to perform channel estimation and demodulation on a received signal according to the dynamic signaling.

In an implementation, the UE receives the dynamic signaling including port information, layer information and scrambling identifier information transmitted by the base station, and performs demodulation on the received signal according to the dynamic signaling; wherein, the value of the scrambling identifier may be taken as 0, or may be taken as UE-ID. In this implementation, the base station may not configure candidate information according to a high-layer signaling, that is, step 901 may be omitted.

In an implementation, the dynamic signaling may include a first dynamic signaling containing port information and layer information; and furthermore, the first dynamic signaling may include information indicating identifier selected from two scrambling identifiers.

In another implementation, the dynamic signaling may include a first dynamic signaling containing port information and layer information, and the method may further include: receiving, by the UE, a second dynamic signaling transmitted by the base station, the dynamic signaling being used to indicate a scrambling sequence configured by a high layer. For example, the scrambling sequence configured by the high layer may be indicated by adding 1 bit into the dynamic signaling.

In a further implementation, the method may further include: receiving, by the UE, a third dynamic signaling transmitted by the base station, the dynamic signaling being used to indicate a load of the DM-RS. For example, 1 bit may be added into the dynamic signaling to indicate whether the load of the DM-RS is 12RE or 24RE.

In this embodiment, a signaling may also be used to indicate that one UE performs orthogonal MU-MIMO with a maximum sum rank of 4 with other UE, or indicate that the UE with a rank of greater than 2 to perform non-orthogonal MU-MIMO with the other UE.

In an implementation, the first dynamic signaling may indicate that ports of the UE are 7, 8, two codewords are used and a number of layers is 2, and a port of the other UE is 9, one codeword is used and a number of layers is 1; or, the ports of the UE are 7, 8, 9, two codewords are used and the number of layers is 3, and the port of the other UE is 10, one codeword is used and the number of layers is 1; or, the ports of the UE are 7, 8, two codewords are used and the number of layers is 2, and the ports of the other UE are 9, 10, two codewords are used and the number of layers is 2.

In another implementation, the first dynamic signaling may indicate that the port of the UE is 7, one codeword is used and the number of layers is 1, and the ports of the other UE are 8, 9, one codeword is used and the number of layers is 2; or, the port of the UE is 7, one codeword is used and the number of layers is 1, and the ports of the other UE are 8, 9, 10, one codeword is used and the number of layers is 3; or, the ports of the UE are 7, 8, one codeword is used and the number of layers is 2, and the ports of the other UE are 9, 10, one codeword is used and the number of layers is 2.

The contents in Embodiment 2 may be referred to for details of the above signaling design, such as the contents in tables 5 and 6 in Embodiment 2, and in Figs. 7 and 8. However, the present disclosure is not limited thereto.

In a particular implementation, the dynamic signaling may further include a second dynamic signaling used for indicating a scrambling identifier; wherein, the scrambling identifier may be that as described above. The candidate information of the scrambling identifier may be configured by the base station by using a high-layer signaling, and then is indicated by the second dynamic signaling.

In a particular implementation, the dynamic signaling may further include a fourth dynamic signaling used for indicating sum rank information. And the sum rank information may be used to transmit the sum rank information, and the relevant art may be referred to. Furthermore, the sum rank information may be used for indicating the load of the DM-RS.

It can be seen from the above embodiment that by configuring the candidate information of the scrambling identifier by the base station for the UE, the UE may determine the scrambling identifier according to the dynamic signaling, and support transparent MU-MIMO; therefore, larger dimensions of MU-MIMO may be supported, and an advantage of large-scale antenna maybe fully acquired.

Embodiment 4

An embodiment of the present disclosure provides a signaling indication method for a DM-RS, applicable to a UE side of a MU-MIMO system, with contents identical to those in Embodiment 2 being not going to be described any further.

Fig. 10 is a flowchart of the signaling indication method of the embodiment of the present disclosure. As shown in Fig. 10, the method includes:

step 1001: receiving, by UE, a dynamic signaling for a DM-RS transmitted by a base station; and
step 1002: performing, by the UE, orthogonal MU-MIMO with a maximum sum rank of 4 by the UE with other UE, or performing non-orthogonal MU-MIMO by the UE with the other UE.

In an implementation, the dynamic signaling may include a first dynamic signaling, the first dynamic signaling indicating that ports of the UE are 7, 8, two codewords are used and a number of layers is 2, and a port of other UE is 9, one codeword is used and a number of layers is 1; or, the ports of the UE are 7, 8, 9, two codewords are used and the number of layers is 3, and the port of the other UE is 10, one codeword is used and the number of layers is 1; or, the ports of the UE are 7, 8, two codewords are used and the number of layers is 2, and the ports of the other UE are 9, 10, two codewords are used and the number of layers is 2.

In another implementation, the dynamic signaling may include a first dynamic signaling, the first dynamic signaling indicating that the port of the UE is 7, one codeword is used and the number of layers is 1, and the ports of the other UE are 8, 9, one codeword is used and the number of layers is 2; or, the port of the UE is 7, one codeword is used and the number of layers is 1, and the ports of the other UE are 8, 9, 10, one codeword is used and the number of layers is 3; or, the ports of the UE are 7, 8, one codeword is used and the number of layers is 2, and the ports of the other UE are 9, 10, one codeword is used and the number of layers is 2.

In a particular implementation, the dynamic signaling may further include a second dynamic signaling used for indicating a scrambling identifier. The indicated scrambling identifier may be that as described in Embodiment 1. Candidate information of the scrambling identifier may be configured by the base station by using a high-layer signaling, and then is indicated by the second dynamic signaling. However, the present disclosure is not limited thereto, and a particular implementation may be determined according to an actual situation.

Furthermore, the dynamic signaling may include a fourth dynamic signaling used for indicating sum rank information. In particular implementation, the sum rank information may be used for indicating a load of the DM-RS.

In a further implementation, the method may further include: receiving by the UE, a dynamic signaling transmitted by the base station, the dynamic signaling being used to indicate a load of the DM-RS. For example, 1 bit may be added into the dynamic signaling to indicate whether a load of the DM-RS is 12RE or 24RE.

It can be seen from the above embodiment that by transmitting the signaling indication by the base station to the UE, the UE is made to perform orthogonal or non-orthogonal MU-MIMO; therefore, larger dimensions of MU-MIMO may be supported, and an advantage of large-scale antenna may be fully acquired.

Embodiment 5

An embodiment of the present disclosure provides a base station, applicable to a MU-MIMO system. This embodiment corresponds to the method described in Embodiment 1, with identical contents being not going to be described any further.

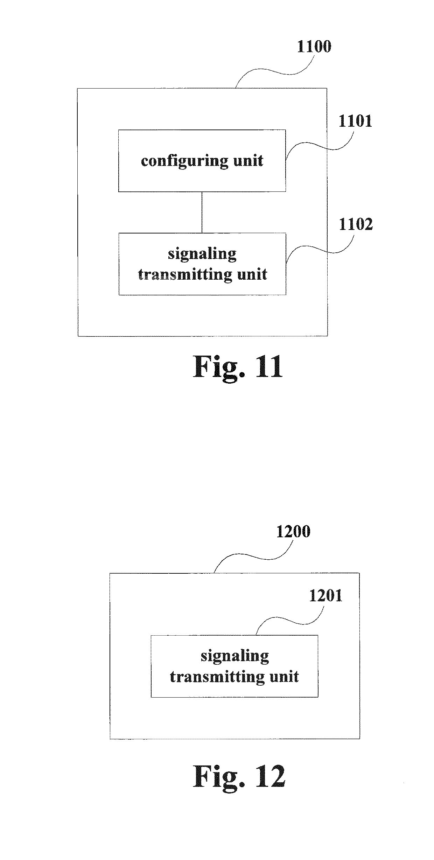

Fig. 11 is a schematic diagram of the structure of the base station of the embodiment of the present disclosure. As shown in Fig. 11, the base station 1100 includes: a configuring unit 1101 and a signaling transmitting unit 1102. The relevant art may be referred to for other parts of the base station 1100.

Wherein, the configuring unit 1101 is configured to configure UE with candidate information of scrambling identifiers by using a high-layer signaling, and the signaling transmitting unit 1102 is configured to transmit a dynamic signaling to the UE, so that the UE performs demodulation on a received signal according to the dynamic signaling.

In a particular implementation, the candidate information may be two scrambling identifiers; however, the present disclosure is not limited thereto. The base station may further include: a selecting unit. The selecting unit may be configured to select two values from a set {0,1,2,3} or a set {0,1, the identifier of the UE} as the two scrambling identifiers.

In an implementation, the dynamic signaling may include a first dynamic signaling containing port information and layer information, the first dynamic signaling further including information for indicating identifier information selected from the candidate information. The contents shown in Table 3 may be referred to.

In another implementation, the dynamic signaling may include a first dynamic signaling containing port information and layer information. The contents shown in Table 4 may be referred to. And the signaling transmitting unit 1102 may further be configured to transmit a second dynamic signaling to the UE, the second dynamic signaling including information for indicating identifier information selected from the candidate information.

In a further implementation, the signaling transmitting unit 1102 is further configured to transmit a third dynamic signaling indicating a load of the DM-RS to the UE.

It can be seen from the above embodiment that by configuring the candidate information of the scrambling identifier by the base station for the UE, the UE may determine the scrambling identifier according to the dynamic signaling, and support transparent MU-MIMO; therefore, larger dimensions of MU-MIMO may be supported, and an advantage of large-scale antenna may be fully acquired.

Embodiment 6

An embodiment of the present disclosure provides a base station, applicable to a MU-MIMO system. This embodiment corresponds to the method described in Embodiment 2, with identical contents being not going to be described any further.

Fig. 12 is a schematic diagram of the structure of the base station of the embodiment of the present disclosure. As shown in Fig. 12, the base station 1200 includes: a signaling transmitting unit 1201. The relevant art may be referred to for other parts of the base station 1200.

Wherein, the signaling transmitting unit 1201 is configured to transmit a dynamic signaling for a DM-RS to UE, so as to indicate the UE to perform orthogonal MU-MIMO with a maximum sum rank of 4 with other UE, or indicate the UE with a rank of greater than 2 to perform non-orthogonal MU-MIMO with the other UE.

In an implementation, the dynamic signaling may include a first dynamic signaling, the first dynamic signaling indicating that ports of the UE are 7, 8, two codewords are used and a number of layers is 2, and a port of the other UE is 9, one codeword is used and a number of layers is 1; or, the ports of the UE are 7, 8, 9, two codewords are used and the number of layers is 3, and the port of the other UE is 10, one codeword is used and the number of layers is 1; or, the ports of the UE are 7, 8, two codewords are used and the number of layers is 2, and the ports of the other UE are 9, 10, two codewords are used and the number of layers is 2. The contents shown in Table 5 may be referred to.

In another implementation, the dynamic signaling may include a first dynamic signaling, the first dynamic signaling indicating that the port of the UE is 7, one codeword is used and the number of layers is 1, and the ports of the other UE are 8, 9, one codeword is used and the number of layers is 2; or, the port of the UE is 7, one codeword is used and the number of layers is 1, and the ports of the other UE are 8, 9, 10, one codeword is used and the number of layers is 3; or, the ports of the UE are 7, 8, one codeword is used and the number of layers is 2, and the ports of the other UE are 9, 10, one codeword is used and the number of layers is 2. The contents shown in Table 6 may be referred to.

In a particular implementation, the dynamic signaling may further include a second dynamic signaling for indicating a scrambling identifier. Furthermore, the dynamic signaling may include a fourth dynamic signaling for indicating sum rank information.

It can be seen from the above embodiment that by transmitting the signaling indication by the base station to the UE, the UE is made to perform orthogonal or non-orthogonal MU-MIMO; therefore, larger dimensions of MU-MIMO may be supported, and an advantage of large-scale antenna may be fully acquired.

Embodiment 7

An embodiment of the present disclosure provides UE, applicable to an MU-MIMO system. This embodiment corresponds to the method described in Embodiment 3, with identical contents being not going to be described any further.

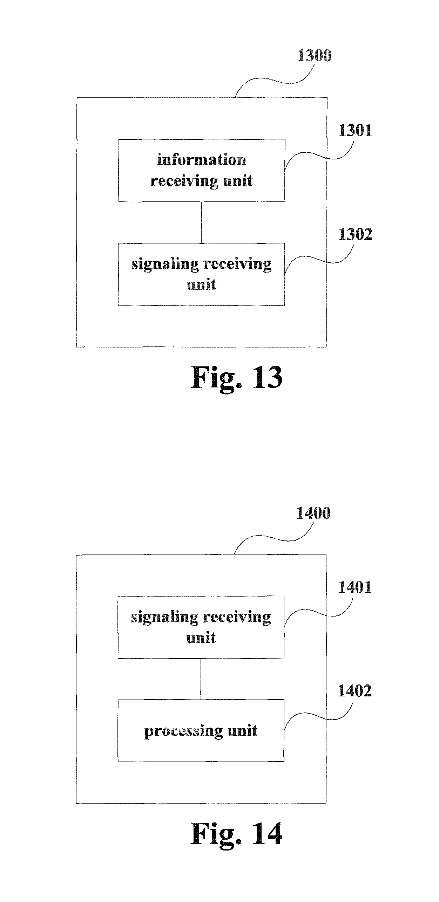

Fig. 13 is a schematic diagram of the structure of the UE of the embodiment of the present disclosure. As shown in Fig. 13, the UE 1300 includes: an information receiving unit 1301 and a signaling receiving unit 1302. The relevant art may be referred to for other parts of the UE 1300.

Wherein, the information receiving unit 1301 is configured to receive candidate information of scrambling identifiers configured by a base station, and the signaling receiving unit 1302 is configured to receive a dynamic signaling transmitted by the base station, so as to perform channel estimation and demodulation on a received signal according to the dynamic signaling.

In an implementation, the dynamic signaling may include a first dynamic signaling containing port information and layer information, the first dynamic signaling further including information for indicating identifier information selected from two scrambling identifiers.

In another implementation, the dynamic signaling may include a first dynamic signaling containing port information and layer information, and the signaling receiving unit 1302 may further be configured to receive a second dynamic signaling transmitted by the base station, the second dynamic signaling including information for indicating identifier information selected from two scrambling identifiers.

In a further implementation, the signaling receiving unit 1302 is further configured to receive a third dynamic signaling indicating a load of the DM-RS transmitted by the base station.

It can be seen from the above embodiment that by configuring the candidate information of the scrambling identifier by the base station for the UE, the UE may determine the scrambling identifier according to the dynamic signaling, and support transparent MU-MIMO; therefore, larger dimensions of MU-MIMO may be supported, and an advantage of large-scale antenna may be fully acquired.

Embodiment 8

An embodiment of the present disclosure provides UE, applicable to an MU-MIMO system. This embodiment corresponds to the method described in Embodiment 4, with identical contents being not going to be described any further.

Fig. 14 is a schematic diagram of the structure of the UE of the embodiment of the present disclosure. As shown in Fig. 14, the UE 1400 includes: a signaling receiving unit 1401 and a processing unit 1402. The relevant art may be referred to for other parts of the UE 1400.

Wherein, the signaling receiving unit 1401 is configured to receive a dynamic signaling for a DM-RS transmitted by a base station, and the processing unit 1402 is configured to perform orthogonal MU-MIMO with a maximum sum rank of 4 with other UE, or perform non-orthogonal MU-MIMO with the other UE.

In an implementation, the dynamic signaling may include a first dynamic signaling, the first dynamic signaling indicating that ports of the UE are 7, 8, two codewords are used and a number of layers is 2, and a port of the other UE is 9, one codeword is used and a number of layers is 1; or, the ports of the UE are 7, 8, 9, two codewords are used and the number of layers is 3, and the port of the other UE is 10, one codeword is used and the number of layers is 1; or, the ports of the UE are 7, 8, two codewords are used and the number of layers is 2, and the ports of the other UE are 9, 10, two codewords are used and the number of layers is 2.

In another implementation, the dynamic signaling may include a first dynamic signaling, the first dynamic signaling indicating that the port of the UE is 7, one codeword is used and the number of layers is 1, and the ports of the other UE are 8, 9, one codeword is used and the number of layers is 2; or, the port of the UE is 7, one codeword is used and the number of layers is 1, and the ports of the other UE are 8, 9, 10, one codeword is used and the number of layers is 3; or, the ports of the UE are 7, 8, one codeword is used and the number of layers is 2, and the ports of the other UE are 9, 10, one codeword is used and the number of layers is 2.

It can be seen from the above embodiment that by transmitting the signaling indication by the base station to the UE, the UE is made to perform orthogonal or non-orthogonal MU-MIMO; therefore, larger dimensions of MU-MIMO may be supported, and an advantage of large-scale antenna may be fully acquired.

Embodiment 9

An embodiment of the present disclosure provides a communication system, including the base station as described in Embodiment 5 and the UE as described in Embodiment 7; or the base station as described in Embodiment 6 and the UE as described in Embodiment 8.

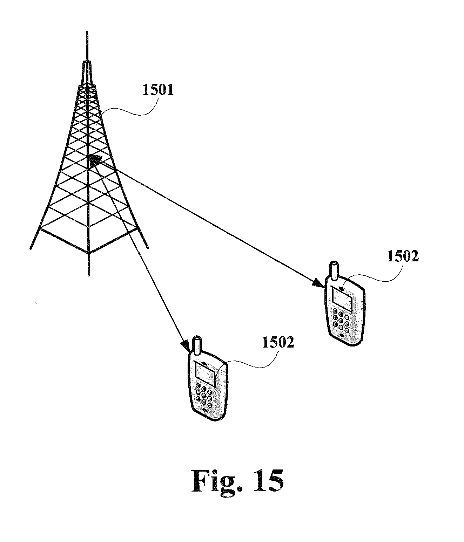

Fig. 15 is a schematic diagram of the structure of the communication system of the embodiment of the present disclosure. As shown in Fig. 15, the communication system 1500 includes: a base station 1501 and UE 1502; wherein, the base station may be that as described in Embodiment 5 or 6, and the UE may be that as described in Embodiment 7 or 8.

Embodiments 1-8 may be referred to for other contents of the communication system 1500. It should be noted that the structure of the communication system is only schematically shown in Fig. 15. However, the present disclosure is not limited thereto, and a particular implementation may be determined according to an actual situation.

An embodiment of the present disclosure further provides a computer-readable program, wherein when the program is executed in a base station, the program enables a computer to carry out the signaling indication method for DM-RS as described in Embodiment 1 or 2 in the base station.

An embodiment of the present disclosure further provides a storage medium in which a computer-readable program is stored, wherein the computer-readable program enables a computer to carry out the signaling indication method for DM-RS as described in Embodiment 1 or 2 in a base station.

An embodiment of the present disclosure further provides a computer-readable program, wherein when the program is executed in UE, the program enables a computer to carry out the signaling indication method for DM-RS as described in Embodiment 3 or 4 in the UE.

An embodiment of the present disclosure further provides a storage medium in which a computer-readable program is stored, wherein the computer-readable program enables a computer to carry out the signaling indication method for DM-RS as described in Embodiment 3 or 4 in UE.

The above apparatuses and methods of the present disclosure may be implemented by hardware, or by hardware in combination with software. The present disclosure relates to such a computer-readable program that when the program is executed by a logic device, the logic device is enabled to carry out the apparatuses or components as described above, or to carry out the methods or steps as described above. The present disclosure also relates to a storage medium for storing the above program, such as a hard disk, a floppy disk, a CD, a DVD, and a flash memory, etc.

One or more functional blocks and/or one or more combinations of the functional blocks in Figures may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof. And they may also be realized as a combination of computing equipment, such as a combination of a DSP and a microprocessor, multiple processors, one or more microprocessors in communication combination with a DSP, or any other such configuration.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

**Claims**

1. A signaling indication method for a demodulation reference signal (DM-RS), applicable to a multi-user multiple-input multiple-output (MU-MIMO) system, the method comprising:

configuring, by a base station, UE with candidate information of scrambling identifiers by using a high-layer signaling; and

transmitting a dynamic signaling to the UE, so that the UE performs channel estimation and demodulation on a received signal according to the dynamic signaling.

2. The method according claim 1, wherein the candidate information is two scrambling identifiers, and the method further comprises:

selecting, by the base station, two values from a set {0,1,2,3} or a set {0,1, the identifier of the UE} as the two scrambling identifiers.

3. The method according claim 1, wherein the dynamic signaling comprises a first dynamic signaling containing port information and layer information, the first dynamic signaling further comprising information for indicating identifier information selected from the candidate information.

4. The method according claim 1, wherein the method further comprises:

configuring, by the base station, the UE and other UE with candidate information comprising at least one identical scrambling identifier according to positions of the UE and the other UE.

5. The method according claim 1, wherein the dynamic signaling comprises a first dynamic signaling containing port information and layer information, and the method further comprises:

transmitting, by the base station, a second dynamic signaling to the UE, the second dynamic signaling comprising information for indicating identifier information selected from the candidate information.

6. The method according claim 5, wherein 1 bit is added into the second dynamic signaling to indicate the identifier information.

7. The method according claim 3 or 5, wherein the method further comprises:

transmitting, by the base station to the UE, a third dynamic signaling indicating a load of the DM-RS; and wherein 1 bit is added into the third dynamic signaling to indicate whether the load of the DM-RS is 12RE or 24RE.

8. The method according claim 3 or 5, wherein the first dynamic signaling indicates that ports of the UE are 7, 8, two codewords are used and a number of layers is 2, and a port of the other UE is 9, one codeword is used and a number of layers is 1;

or, the ports of the UE are 7, 8, 9, two codewords are used and the number of layers is 3, and the port of the other UE is 10, one codeword is used and the number of layers is 1;

or, the ports of the UE are 7, 8, two codewords are used and the number of layers is 2, and the ports of the other UE are 9, 10, two codewords are used and the number of layers is 2.

9. The method according claim 3 or 5, wherein the first dynamic signaling indicates that the port of the UE is 7, one codeword is used and the number of layers is 1, and the ports of the other UE are 8, 9, one codeword is used and the number of layers is 2;

or, the port of the UE is 7, one codeword is used and the number of layers is 1, and the ports of the other UE are 8, 9, 10, one codeword is used and the number of layers is 3;

or, the ports of the UE are 7, 8, one codeword is used and the number of layers is 2, and the ports of the other UE are 9, 10, one codeword is used and the number of layers is 2.

10. The method according claim 3 or 5, wherein the dynamic signaling further comprises a fourth dynamic signaling indicating sum rank information.

11. The method according claim 10, wherein the sum rank information is further used to indicate a load of the DM-RS.

12. A signaling indication method for a DM-RS, applicable to an MU-MIMO system, the method comprising:

transmitting, by a base station, a dynamic signaling containing port information, layer information and scrambling identifier information to UE, so that the UE demodulates a received signal according to the dynamic signaling; wherein a value of the scrambling identifier information is taken as 0, or taken as the identifier of the UE.

**13.** A signaling indication method for a DM-RS, applicable to an MU-MIMO system, the method comprising:

transmitting, by a base station, a dynamic signaling for a DM-RS to UE, so as to indicate the UE to perform orthogonal MU-MIMO with a maximum sum rank of 4 with other UE, or indicate that the UE with a rank of greater than 2 performs non-orthogonal MU-MIMO with the other UE.

**14.** The method according claim 13, wherein the dynamic signaling comprises a first dynamic signaling, the first dynamic signaling indicating that ports of the UE are 7, 8, two codewords are used and a number of layers is 2, and a port of the other UE is 9, one codeword is used and a number of layers is 1;
or, the ports of the UE are 7, 8, 9, two codewords are used and the number of layers is 3, and the port of the other UE is 10, one codeword is used and the number of layers is 1;
or, the ports of the UE are 7, 8, two codewords are used and the number of layers is 2, and the ports of the other UE are 9, 10, two codewords are used and the number of layers is 2.

**15.** The method according claim 13, wherein the dynamic signaling comprises a first dynamic signaling, the first dynamic signaling indicating that the port of the UE is 7, one codeword is used and the number of layers is 1, and the ports of the other UE are 8, 9, one codeword is used and the number of layers is 2;
or, the port of the UE is 7, one codeword is used and the number of layers is 1, and the ports of the other UE are 8, 9, 10, one codeword is used and the number of layers is 3;
or, the ports of the UE are 7, 8, one codeword is used and the number of layers is 2, and the ports of the other UE are 9, 10, one codeword is used and the number of layers is 2.

**16.** The method according claim 14 or 15, wherein the dynamic signaling further comprises a second dynamic signaling for indicating a scrambling identifier.

**17.** The method according claim 14 or 15, wherein the dynamic signaling further comprises a fourth dynamic signaling for indicating sum rank information.

**18.** The method according claim 17, wherein the sum rank information is further used to indicate a load of the DM-RS.

**19.** A signaling indication method for a DM-RS, applicable to an MU-MIMO system, the method comprising:

receiving, by UE, candidate information of scrambling identifiers configured by a base station; and
receiving, by the UE, a dynamic signaling transmitted by the base station, so as to perform channel estimation and demodulation on a received signal according to the dynamic signaling.

**20.** The method according claim 19, wherein the dynamic signaling comprises a first dynamic signaling containing port information and layer information, the first dynamic signaling further comprising information for indicating identifier information selected from the candidate information.

**21.** The method according claim 19, wherein the dynamic signaling comprises a first dynamic signaling containing port information and layer information, and the method further comprises:

receiving, by the UE, a second dynamic signaling transmitted by the base station, the second dynamic signaling comprising information for indicating identifier information selected from the candidate information.

**22.** The method according claim 21, wherein 1 bit is added into the second dynamic signaling to indicate the identifier information.

**23.** The method according claim 20 or 21, wherein the method further comprises:

receiving, by the UE, a third dynamic signaling indicating a load of the DM-RS transmitted by the base station; wherein 1 bit is added into the third dynamic signaling to indicate whether the load of the DM-RS is 12RE or 24RE.

**24.** The method according claim 20 or 21, wherein the first dynamic signaling indicates that ports of the UE are 7, 8, two codewords are used and a number of layers is 2, and a port of the other UE is 9, one codeword is used and a number of layers is 1;

or, the ports of the UE are 7, 8, 9, two codewords are used and the number of layers is 3, and the port of the other UE is 10, one codeword is used and the number of layers is 1;

or, the ports of the UE are 7, 8, two codewords are used and the number of layers is 2, and the ports of the other UE are 9, 10, two codewords are used and the number of layers is 2.

**25.** The method according claim 20 or 21, wherein the first dynamic signaling indicates that the port of the UE is 7, one codeword is used and the number of layers is 1, and the ports of the other UE are 8, 9, one codeword is used and the number of layers is 2;

or, the port of the UE is 7, one codeword is used and the number of layers is 1, and the ports of the other UE are 8, 9, 10, one codeword is used and the number of layers is 3;

or, the ports of the UE are 7, 8, one codeword is used and the number of layers is 2, and the ports of the other UE are 9, 10, one codeword is used and the number of layers is 2.

**26.** The method according claim 20 or 21, wherein the dynamic signaling further comprises a fourth dynamic signaling indicating sum rank information.

**27.** The method according claim 26, wherein the sum rank information is further used to indicate a load of the DM-RS.

**28.** A signaling indication method for a DM-RS, applicable to an MU-MIMO system, the method comprising:

receiving, by UE, a dynamic signaling containing port information, layer information and scrambling identifier information transmitted by a base station, so as to perform channel estimation and demodulation on a received signal according to the dynamic signaling;

wherein a value of the scrambling identifier information is taken as 0, or taken as the identifier of the UE.

**29.** A signaling indication method for a DM-RS, applicable to an MU-MIMO system, the method comprising:

receiving, by UE, a dynamic signaling for a DM-RS transmitted by a base station; and

performing orthogonal MU-MIMO with a maximum sum rank of 4 by the UE with other UE, or performing non-orthogonal MU-MIMO by the UE with the other UE.

**30.** The method according claim 29, wherein the dynamic signaling comprises a first dynamic signaling, the first dynamic signaling indicating that ports of the UE are 7, 8, two codewords are used and a number of layers is 2, and a port of other UE is 9, one codeword is used and a number of layers is 1;

or, the ports of the UE are 7, 8, 9, two codewords are used and the number of layers is 3, and the port of the other UE is 10, one codeword is used and the number of layers is 1;

or, the ports of the UE are 7, 8, two codewords are used and the number of layers is 2, and the ports of the other UE are 9, 10, two codewords are used and the number of layers is 2.

**31.** The method according claim 29, wherein the dynamic signaling comprises a first dynamic signaling, the first dynamic signaling indicating that the port of the UE is 7, one codeword is used and the number of layers is 1, and the ports of the other UE are 8, 9, one codeword is used and the number of layers is 2;

or, the port of the UE is 7, one codeword is used and the number of layers is 1, and the ports of the other UE are 8, 9, 10, one codeword is used and the number of layers is 3;

or, the ports of the UE are 7, 8, one codeword is used and the number of layers is 2, and the ports of the other UE are 9, 10, one codeword is used and the number of layers is 2.

**32.** A base station, applicable to an MU-MIMO system, the base station comprising:

a configuring unit, configured to configure UE with candidate information of scrambling identifiers by using a high-layer signaling; and

a signaling transmitting unit, configured to transmit a dynamic signaling to the UE, so that the UE performs channel estimation and demodulation on a received signal according to the dynamic signaling.

**33.** The base station according to claim 32, wherein the candidate information is two scrambling identifiers, and the base station further comprises:

a selecting unit, configured to select two values from a set {0,1,2,3} or a set {0,1, the identifier of the UE} as the two scrambling identifiers.

34. The base station according to claim 32 or 33, wherein the dynamic signaling comprises a first dynamic signaling containing port information and layer information, the first dynamic signaling further comprising information for indicating identifier information selected from the candidate information.

35. The base station according to claim 32 or 33, wherein the dynamic signaling comprises a first dynamic signaling containing port information and layer information;
and the signaling transmitting unit is configured to transmit a second dynamic signaling to the UE, the second dynamic signaling comprising information for indicating identifier information selected from the candidate information.

36. The base station according to claim 32 or 33, wherein the signaling transmitting unit is configured to transmit a third dynamic signaling indicating a load of the DM-RS to the UE.

37. A base station, applicable to an MU-MIMO system, the base station comprising:

a signaling transmitting unit, configured to transmit a dynamic signaling for a DM-RS to UE, so as to indicate the UE to perform orthogonal MU-MIMO with a maximum sum rank of 4 with other UE, or indicate the UE with a rank of greater than 2 to perform non-orthogonal MU-MIMO with the other UE.

38. The base station according claim 37, wherein the dynamic signaling comprises a first dynamic signaling, the first dynamic signaling indicating that ports of the UE are 7, 8, two codewords are used and a number of layers is 2, and a port of the other UE is 9, one codeword is used and a number of layers is 1;
or, the ports of the UE are 7, 8, 9, two codewords are used and the number of layers is 3, and the port of the other UE is 10, one codeword is used and the number of layers is 1;
or, the ports of the UE are 7, 8, two codewords are used and the number of layers is 2, and the ports of the other UE are 9, 10, two codewords are used and the number of layers is 2.

39. The base station according claim 37, wherein the dynamic signaling comprises a first dynamic signaling, the first dynamic signaling indicating that the port of the UE is 7, one codeword is used and the number of layers is 1, and the ports of the other UE are 8, 9, one codeword is used and the number of layers is 2;
or, the port of the UE is 7, one codeword is used and the number of layers is 1, and the ports of the other UE are 8, 9, 10, one codeword is used and the number of layers is 3;
or, the ports of the UE are 7, 8, one codeword is used and the number of layers is 2, and the ports of the other UE are 9, 10, one codeword is used and the number of layers is 2.

40. The base station according claim 38 or 39, wherein the dynamic signaling further comprises a second dynamic signaling for indicating a scrambling identifier.

41. The base station according claim 38 or 39, wherein the dynamic signaling further comprises a fourth dynamic signaling for indicating sum rank information.

42. UE, applicable to an MU-MIMO system, the UE comprising:

an information receiving unit, configured to receive candidate information of scrambling identifiers configured by a base station; and
a signaling receiving unit, configured to receive a dynamic signaling transmitted by the base station, so as to perform channel estimation and demodulation on a received signal according to the dynamic signaling.

43. The UE according claim 42, wherein the dynamic signaling comprises a first dynamic signaling containing port information and layer information, the first dynamic signaling further comprising information for indicating identifier information selected from the candidate information.

44. The UE according claim 42, wherein the dynamic signaling comprises a first dynamic signaling containing port information and layer information,

and the signaling receiving unit is further configured to receive a second dynamic signaling transmitted by the base station, the second dynamic signaling comprising information for indicating identifier information selected from the candidate information.

45. The UE according claim 43 or 44, wherein the signaling receiving unit is further configured to receive a third dynamic signaling indicating a load of the DM-RS transmitted by the base station.

46. UE, applicable to an MU-MIMO system, the UE comprising:

a signaling receiving unit, configured to receive a dynamic signaling for a DM-RS transmitted by a base station; and
a processing unit, configured to perform orthogonal MU-MIMO with a maximum sum rank of 4 with other UE, or perform non-orthogonal MU-MIMO with the other UE.

47. The UE according claim 46, wherein the dynamic signaling comprises a first dynamic signaling, the first dynamic signaling indicating that ports of the UE are 7, 8, two codewords are used and a number of layers is 2, and a port of the other UE is 9, one codeword is used and a number of layers is 1;
or, the ports of the UE are 7, 8, 9, two codewords are used and the number of layers is 3, and the port of the other UE is 10, one codeword is used and the number of layers is 1;
or, the ports of the UE are 7, 8, two codewords are used and the number of layers is 2, and the ports of the other UE are 9, 10, two codewords are used and the number of layers is 2.

48. The UE according claim 46, wherein the dynamic signaling comprises a first dynamic signaling, the first dynamic signaling indicating that the port of the UE is 7, one codeword is used and the number of layers is 1, and the ports of the other UE are 8, 9, one codeword is used and the number of layers is 2;
or, the port of the UE is 7, one codeword is used and the number of layers is 1, and the ports of the other UE are 8, 9, 10, one codeword is used and the number of layers is 3;
or, the ports of the UE are 7, 8, one codeword is used and the number of layers is 2, and the ports of the other UE are 9, 10, one codeword is used and the number of layers is 2.

49. A communication system, comprising the base station as claimed in any one of claims 32-36 and the UE as claimed in any one of claims 42-45;
or comprising the base station as claimed in any one of claims 37-41 and the UE as claimed in any one of claims 46-48.

50. A computer-readable program, wherein when the program is executed in a base station, the program enables a computer to carry out the signaling indication method for DM-RS as claimed in any one of claims 1-18 in the base station.

51. A storage medium in which a computer-readable program is stored, wherein the computer-readable program enables a computer to carry out the signaling indication method for DM-RS as claimed in any one of claims 1-18 in a base station.

52. A computer-readable program, wherein when the program is executed in UE, the program enables a computer to carry out the signaling indication method for DM-RS as claimed in any one of claims 19-31 in the UE.

53. A storage medium in which a computer-readable program is stored, wherein the computer-readable program enables a computer to carry out the signaling indication method for DM-RS as claimed in any one of claims 19-31 in UE.

**Fig. 1**

**Fig. 2**

301

configuring, by a base station, UE with candidate information of scrambling identifiers by using a high-layer signaling

302

transmitting, by the base station, a dynamic signaling to the UE, so that the UE performs channel estimation and demodulation on a received signal according to the dynamic signaling

## Fig. 3

Configured by high layer
SCID={0,1}
UE2

UE3

UE4

Configured by high layer
SCID={0,2}                    UE1

UE2、 UE4 is configured with identical SCID=0
to perform orthogonal MU-MIMO transmission

## Fig. 4

501

transmitting, by a base station, a dynamic signaling for demodulating a DM-RS to UE, so as to indicate the UE to perform orthogonal MU-MIMO with a maximum sum rank of 4 with other UE, or indicate the UE with a rank of greater than 2 to perform non-orthogonal MU-MIMO with the other UE

# Fig. 5

| Orthogonal MU-MIMO codeword to layer mapping | | | | | | |
|---|---|---|---|---|---|---|
| | MU-MIMO | | Port 7, nscid=0 | | MU-MIMO | Port 7, nscid=1 |
| User 1 | Codeword 1 | ———— | Layer 1 | User 1 | Codeword 1 ———— | Layer 1 |
| | | | Port 8 nscid = 0 | | | Port 8 nscid = 1 |
| User 2 | Codeword 1 | ———— | Layer 2 | User 2 | Codeword 1 ———— | Layer 2 |

# Fig. 6

**Fig. 7**

23

Fig. 8

901

receiving, by UE, candidate information of scrambling identifiers configured by a base station

902

receiving, by the UE, a dynamic signaling transmitted by the base station, so as to perform channel estimation and demodulation on a received signal according to the dynamic signaling

**Fig. 9**

1001

receiving, by UE, a dynamic signaling for a DM-RS transmitted by a base station

1002

performing, by the UE, orthogonal MU-MIMO with a maximum sum rank of 4 by the UE with other UE, or performing non-orthogonal MU-MIMO by the UE with the other UE

**Fig. 10**

1100

configuring unit

1101

signaling
transmitting unit

1102

**Fig. 11**

1200

1201

signaling
transmitting unit

**Fig. 12**

1300

1301

information
receiving unit

1302

signaling receiving
unit

## Fig. 13

1400

1401

signaling receiving
unit

1402

processing unit

## Fig. 14

**Fig. 15**

# INTERNATIONAL SEARCH REPORT

| International application No. |
|---|
| **PCT/CN2013/071008** |

### A. CLASSIFICATION OF SUBJECT MATTER

See the extra sheet

According to International Patent Classification (IPC) or to both national classification and IPC

### B. FIELDS SEARCHED

Minimum documentation searched (classification system followed by classification symbols)

IPC: H04W, H04B, H04L

Documentation searched other than minimum documentation to the extent that such documents are included in the fields searched

Electronic data base consulted during the international search (name of data base and, where practicable, search terms used)

CPRSABS; CNABS; CNTXT; VEN; CNKI: RF, interference, dynamic, multi-input and multi-output, MIMO, demodulation reference signal, DMRS, DM-RS, rank, signaling

### C. DOCUMENTS CONSIDERED TO BE RELEVANT

| Category* | Citation of document, with indication, where appropriate, of the relevant passages | Relevant to claim No. |
|---|---|---|
| X | CN 102149082A (CHINA MOBILE COMMUNICATIONS CORPORATION), 10 August 2011 (10.08.2011), description, paragraphs [0002]-[0084], and figures 1-6 | 1-53 |
| A | CN 101882980 A (ZTE CORP.), 10 November 2010 (10.11.2010), the whole document | 1-53 |
| A | CN 102158302 A (ACADEMY OF TELECOMMUNICATION TECHNOLOGY), 17 August 2011 (17.08.2011), the whole document | 1-53 |
| A | CN 102611486 A (ZTE CORP.), 25 July 2012 (25.07.2012), the whole document | 1-53 |
| A | CN 102859953 A (TELEFONAKTIEBOLAGET L M ERICSSON), 02 January 2013 (02.01.2013), the whole document | 1-53 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 October 2013 (20.10.2013) | **31 October 2013 (31.10.2013)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **DING, Ling** Telephone No.: (86-10) **62411483** |
|---|---|

Form PCT/ISA/210 (second sheet) (July 2009)

## INTERNATIONAL SEARCH REPORT
### Information on patent family members

| International application No. |
| --- |
| **PCT/CN2013/071008** |

| Patent Documents referred in the Report | Publication Date | Patent Family | Publication Date |
| --- | --- | --- | --- |
| CN 102149082 A | 10.08.2011 | WO 2011095062 A1 | 11.08.2011 |
|  |  | US 2012307768 A1 | 06.12.2012 |
|  |  | KR 20120130190 A | 29.11.2012 |
|  |  | JP 2013519271 W | 23.05.2013 |
|  |  | EP 2533589 A1 | 12.12.2012 |
| CN 101882980 A | 10.11.2010 | WO 2011137620 A1 | 10.11.2011 |
| CN 102158302 A | 17.08.2011 | None |  |
| CN 102611486 A | 25.07.2012 | WO 2012097647 A1 | 26.07.2012 |
| CN 102859953 A | 02.01.2013 | WO 2011136710 A1 | 03.11.2011 |
|  |  | EP 2564567 A1 | 06.03.2013 |
|  |  | JP 2013529008 W | 11.07.2013 |
|  |  | US 2013039348 A1 | 14.02.2013 |

Form PCT/ISA/210 (patent family annex) (July 2009)

# EP 2 950 578 A1

## INTERNATIONAL SEARCH REPORT

International application No.

**PCT/CN2013/071008**

**CONTINUATION OF BOX A ON SECOND SHEET: CLASSIFICATION OF SUBJECT MATTER:**

H04W 28/12 (2009.01) i

H04W 28/16 (2009.01) i

H04W 88/02 (2009.01) i

H04W 88/08 (2009.01) i

Form PCT/ISA/210 (extra sheet) (July 2009)